(19) **Europäisches Patentamt European Patent Office Office européen des brevets**

(11) **EP 4 528 322 A1**

(12) **EUROPEAN PATENT APPLICATION**
published in accordance with Art. 153(4) EPC

(43) Date of publication:
26.03.2025 Bulletin 2025/13

(21) Application number: 23933644.9

(22) Date of filing: 20.07.2023

(51) International Patent Classification (IPC):
*G01S 7/495* (2006.01)    *G01S 7/481* (2006.01)

(52) Cooperative Patent Classification (CPC):
Y02A 90/10

(86) International application number:
PCT/CN2023/108298

(87) International publication number:
WO 2024/216771 (24.10.2024 Gazette 2024/43)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.04.2023 CN 202310431185

(71) Applicant: Changzhou Xingyu Automotive
Lighting
Systems Co., Ltd.
Changzhou, Jiangsu 213022 (CN)

(72) Inventors:
• WANG, Xiangyong
Changzhou, Jiangsu 213022 (CN)
• YIN, Lingxiu
Changzhou, Jiangsu 213022 (CN)
• WANG, Qianqian
Changzhou, Jiangsu 213022 (CN)

(74) Representative: Laufhütte, Dieter
Lorenz Seidler Gossel
Rechtsanwälte Patentanwälte
Partnerschaft mbB
Widenmayerstraße 23
80538 München (DE)

(54) **DUAL-WAVELENGTH-BASED TOF LASER RADAR SYSTEM, AND ANTI-INTERFERENCE METHOD THEREFOR**

(57) The present disclosure provides a dual-wavelength time-of-flight (TOF)-based laser radar system and an anti-interference method thereof. A laser radar includes: an emitting unit including a first emitting unit for emitting a laser pulse with a wavelength of $\lambda_1$ and a second emitting unit for emitting a laser pulse with a wavelength of $\lambda_2$, and a detector including a first detector for detecting a laser pulse signal with a wavelength of $\lambda_1$ and a second detector for detecting a laser pulse signal with a wavelength of $\lambda_2$, where the laser radar operates in a normal mode or an anti-interference mode; and in the anti-interference mode, a polling mode, a synchronous mode, a $\lambda_1$ mode, and a $\lambda_2$ mode are switched according to an interference situation to achieve an anti-interference function. The present disclosure achieves monitoring and processing of interference signals by the laser radar through dual-wavelength polling switching and collaborative work. The present disclosure can effectively deal with various interference sources, and has high anti-interference ability.

FIG. 1

# Description

## TECHNICAL FIELD

The present disclosure relates to the technical field of laser radar, and in particular to a dual-wavelength time-of-flight (TOF)-based laser radar system and an anti-interference method thereof.

## BACKGROUND

Laser radar is an abbreviation of a laser detection and ranging system, which detects the three-dimensional structure, spatial position, surface reflectivity, motion status and other information of targets by emitting and receiving laser beams. A time-of-flight (TOF)-based laser radar perceives target information by measuring the TOF of the laser beam and analyzing the echo signal. The TOF-based laser radar often faces interference from same-frequency signals in practical work, which affects the detection performance of the laser radar. Interference sources include natural light, illumination sources, same-frequency laser radar, and same-frequency malicious interference sources. Laser radar systems typically use laser pulses of single wavelength for target perception, and the system architecture includes components such as single-wavelength laser source, optical system, beam deflection device, and detector.

The anti-interference technologies used by the existing single-wavelength TOF-based laser radar include finite pulse coding, pulse amplitude modulation, pulse width modulation, pulse spacing modulation, etc. These anti-interference technologies can reduce the impact of interference sources to some extent, but they cannot effectively deal with complex usage scenarios, especially in the field of autonomous driving.

The finite pulse coding technology and pulse spacing modulation technology can eliminate some interference signal sources, but they will cause an impact on the scanning frequency of the laser radar, increasing the design complexity and hardware cost of the laser radar. In addition, laser radar systems using these two technologies are prone to being blinded by interference sources. The pulse amplitude modulation technology increases the signal-to-noise ratio of the echo signal by increasing the energy of the laser pulse to achieve anti-interference effect. The pulse amplitude modulation technology has an effect on interference from natural light and illumination sources, but the effect is not very significant for same-frequency laser radars and malicious interference sources. The pulse width modulation technology achieves anti-interference by changing the shape of laser pulses and adding pulse width threshold discrimination during echo signal processing. However, the pulse width modulation technology cannot eliminate the influence of same-frequency interference sources and has a certain impact on the ranging performance of the laser radar.

## SUMMARY

The present disclosure aims to solve at least one of the technical problems existing in the prior art.

Therefore, the present disclosure proposes a dual-wavelength time-of-flight (TOF)-based laser radar system and an anti-interference method thereof, achieving the anti-interference ability of the laser radar system through dual-wavelength polling switching and collaborative working modes.

An embodiment of the present disclosure provides an anti-interference method of a dual-wavelength TOF-based laser radar system, where a laser radar is set in an anti-interference mode, a first detector and a second detector are set in an enabled state, and the anti-interference method specifically includes the following steps:

step 1: starting the laser radar system;
step 2: configuring a control and signal processing module to enter an anti-interference mode;
step 3:

in a first case: when a pulse laser emission mode defaults to a $\lambda_1$ mode, allowing the second detector to enter an interference monitoring state, and determining whether the second detector detects an interference;
if the second detector fails to detect an interference for N consecutive frames, N being a positive integer greater than or equal to 1, automatically switching to a $\lambda_2$ mode, and allowing the first detector to enter an interference monitoring state; and
if the second detector detects an interference, automatically switching to a polling mode; and
in a second case: when the pulse laser emission mode defaults to the $\lambda_2$ mode, allowing the first detector to enter the interference monitoring state, and determining whether the first detector detects an interference;
if the first detector fails to detect an interference for N consecutive frames, N being a positive integer greater than or equal to 1, automatically switching to the $\lambda_1$ mode, and allowing the second detector to enter the interference monitoring state; and
if the first detector detects an interference, automatically switching to the polling mode; and

step 4: in the polling mode: allowing the second detector to enter the interference monitoring state when the first detector performs signal detection; allowing the first detector to enter the interference monitoring state when the second detector performs signal detection; and performing, by the control and signal processing module, anti-interference processing; and
step 5:

in a first case: if the first detector and the second detector detect an interference for M consecutive frames simultaneously, where M is a positive integer greater than or equal to 1 and an interference signal is greater than a set threshold, automatically switching to a synchronous mode; and performing, by the control and signal processing module, anti-interference processing, and determining an interference level;

if the interference level is less than a threshold for K consecutive frames, K being a positive integer greater than or equal to 1, automatically switching to the polling mode; and

if the interference level is greater than or equal to the threshold for K consecutive frames, K being a positive integer greater than or equal to 1, automatically switching to the synchronous mode; and

in a second case: if the first detector and the second detector fail to detect an interference for M consecutive frames simultaneously, where M is a positive integer greater than or equal to 1 and an interference signal is less than or equal to a set threshold, automatically switching to the polling mode.

The present disclosure further provides a dual-wavelength TOF-based laser radar system for implementing the anti-interference method, including the control and signal processing module, an emitting unit, an emitting optical system, a beam deflection device, a detection target, a receiving optical system, and a detector, where the control and signal processing module is configured to control laser emission of the emitting unit, reception of the detector, and processing of an echo signal; the emitting unit is configured to emit a laser pulse; the emitting unit includes a first emitting unit for emitting a laser pulse with a wavelength of $\lambda_1$ and a second emitting unit for emitting a laser pulse with a wavelength of $\lambda_2$; the emitting optical system includes an emitting optical path of the first emitting unit and an emitting optical path of the second emitting unit; the beam deflection device is configured to deflect a laser beam to achieve scanning within a predetermined field of view; the detection target is a detectable object within the predetermined field of view; the receiving optical system includes a receiving optical path of the first detector and a receiving optical path of the second detector; the detector includes the first detector and the second detector; the first detector is configured to detect a laser pulse signal with a wavelength of $\lambda_1$; and the second detector is configured to detect a laser pulse signal with a wavelength of $\lambda_2$.

The present disclosure has the following advantages. The present disclosure adopts a dual-light-source and dual-detector modes to achieve the design of the dual-wavelength laser radar system. The present disclosure achieves real-time monitoring of interference through polling switching between dual light sources and dual detectors. The present disclosure achieves the processing of interference signals by the laser radar through the collaborative work of dual light sources and dual detectors. The anti-interference method of the present disclosure can effectively cope with various interference sources and has high anti-interference ability.

According to an embodiment of the present disclosure, in the polling mode, the control and signal processing module performs interference information processing as follows:

step (1): calculating interference intensities of the first detector and the second detector;
step (2): comparing the interference intensities of the first detector and the second detector;
step (3): determining primary data and secondary data; and
step (4): outputting the primary data and the secondary data.

According to an embodiment of the present disclosure, in the synchronous mode, the control and signal processing module performs interference information processing as follows:

first step, acquiring information on a single detection of the first detector and the second detector, where the information includes, but is not limited to, distance, angle, reflectivity, and reflection intensity;
second step, determining whether detection data of the first detector and the second detector are within a predetermined deviation range or satisfy a predetermined relationship, and determining whether there is an interference in the single detection;
third step, determining that the detection data is invalid if there is an interference; and determining that the detection data is valid if there is not any interference; and
fourth step, simultaneously outputting valid data of the first detector and the second detector.

According to an embodiment of the present disclosure, the first emitting unit is any one of a vertical cavity surface emitting laser, an edge emitting laser, and a fiber laser; and the second emitting unit is any one of a vertical cavity surface emitting laser, an edge emitting laser, and a fiber laser.

According to an embodiment of the present disclosure, the first emitting unit and the second emitting unit have laser light sources of a same type; and alternatively, the first emitting unit and the second emitting unit have laser light sources of different types.

According to an embodiment of the present disclosure, the first emitting unit and the second emitting unit each adopt a single-point laser; and alternatively, the first emitting unit and the second emitting unit each adopt a laser array.

According to an embodiment of the present disclosure, the emitting optical system includes a first diaphragm, a second diaphragm, a first collimating lens, a second collimating lens, a first reflector, and a second reflector;

the first diaphragm, the first collimating lens, and the second reflector form the emitting optical path of the first emitting unit;
the second diaphragm, the second collimating lens, the first reflector, and the second reflector form the emitting optical path of the second emitting unit; and laser beams emitted by the first emitting unit and the second emitting unit pass through the second reflector and enter optical paths that coincide to form a coincident beam; and the coincident beam is emitted to the beam deflection device.

According to an embodiment of the present disclosure, the receiving optical system includes a third reflector, a fourth reflector, a first filter, a second filter, a first receiving lens group, a second receiving lens group, and a third diaphragm;

the third reflector, the first filter, the first receiving lens group, and the third diaphragm form the receiving optical path of the first detector;
the third reflector, the fourth reflector, the second filter, the second receiving lens group, and the third diaphragm form the receiving optical path of the second detector; and
after laser pulses with wavelengths of $\lambda_1$ and/or $\lambda_2$ emitted from the beam deflection device reach the first reflector, a laser pulse with one wavelength of $\lambda_1$ and/or $\lambda_2$ is totally emitted by the third reflector, reflected by the fourth reflector, and passes through the second filter, the second receiving lens group, and the third diaphragm to reach the second detector; and a laser pulse with an other wavelength is transmitted from the third reflector and passes through the first filter, the first receiving lens group, and the third diaphragm to reach the first detector.

According to an embodiment of the present disclosure, the first detector is located at a focal plane position of the first receiving lens group, and the second detector is located at a focal plane position of the second receiving lens group.

Other features and advantages of the present disclosure will be described in the following description, and some of these will become apparent from the description or be understood by implementing the present disclosure. The objectives and other advantages of the present disclosure can be implemented or obtained by structures specifically indicated in the description and drawings.

In order to make the above purposes, features, and advantages of the present disclosure clearer and more understandable, the present disclosure is described in detail below using preferred embodiments with reference to the drawings.

## BRIEF DESCRIPTION OF THE DRAWINGS

To describe the technical solutions in the embodiments of the present disclosure or in the prior art more clearly, the following briefly describes the drawings required for describing the embodiments or the prior art. Apparently, the drawings in the following description only show some embodiments of the present disclosure, and a person of ordinary skill in the art may still derive other drawings from these drawings without creative efforts.

FIG. 1 is a first block diagram of a laser radar system according to the present disclosure;
FIG. 2 is a schematic structural diagram of an emitting unit of the laser radar system according to the present disclosure;
FIG. 3 is a schematic structural diagram of an emitting optical system of the laser radar system according to the present disclosure;
FIG. 4 is a schematic structural diagram of a receiving optical system of the laser radar system according to the present disclosure;
FIG. 5 is a schematic diagram of a field of view (FOV) of a detector of the laser radar system according to the present disclosure;
FIG. 6 is a schematic diagram of a laser pulse emission mode according to the present disclosure;
FIG. 7 is a schematic diagram of an operating mode of a laser radar according to the present disclosure;
FIG. 8 is a flowchart of an anti-interference mode according to the present disclosure;
FIG. 9 is a flowchart of interference information processing by a control and signal processing module in a polling mode according to the present disclosure;
FIG. 10 is a flowchart of interference information processing by the control and signal processing module in a synchronous mode according to the present disclosure; and
FIG. 11 is a second block diagram of the laser radar system according to the present disclosure.

## DETAILED DESCRIPTION OF THE EMBODIMENTS

In order to make the objectives, technical solutions, and advantages of the embodiments of the present disclosure clearer, the technical solutions in the embodiments of the present disclosure will be clearly and completely described below in conjunction with the drawings in the embodiments of the present disclosure. Apparently, the described embodiments are some, rather than all of the embodiments of the present disclosure. All other embodiments obtained by a person of ordinary skill in the art based on the embodiments of the present disclosure without creative efforts shall fall within the protection scope of the present disclosure.

Embodiments of the present disclosure provide a dual-wavelength time-of-flight (TOF)-based laser radar system and an anti-interference method thereof, which are described in detail below according to the drawings.

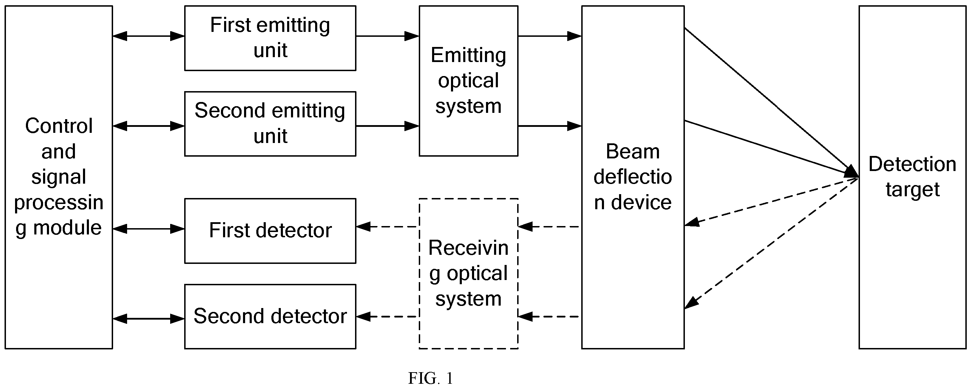

As shown in FIG. 1, the present disclosure proposes a dual-wavelength TOF-based laser radar system, which achieves the anti-interference ability of the laser radar system through dual-wavelength polling switching and collaborative work, and includes a control and signal processing module, an emitting unit, an emitting optical system, a beam deflection device, a detection target, a receiving optical system, and a detector.

The control and signal processing module is configured to control laser emission of the emitting unit, reception of the detector, and processing of an echo signal.

The emitting unit is configured to emit a laser pulse. The emitting unit includes a first emitting unit for emitting a laser pulse with a wavelength of $\lambda_1$ and a second emitting unit for emitting a laser pulse with a wavelength of $\lambda_2$. For example, $\lambda_1$=905 nm, $\lambda_2$=1,550 nm.

The emitting optical system includes an emitting optical path of the first emitting unit and an emitting optical path of the second emitting unit. Specifically, the emitting optical system includes a laser collimating lens, a reflector, and a diaphragm, etc. The emitting optical system includes a first diaphragm, a second diaphragm, a first collimating lens, a second collimating lens, a first reflector, and a second reflector. The first diaphragm, the first collimating lens, and the second reflector form the emitting optical path of the first emitting unit. The second diaphragm, the second collimating lens, the first reflector, and the second reflector form the emitting optical path of the second emitting unit.

The beam deflection device is configured to deflect a laser beam to achieve scanning within a predetermined field of view (FOV), such as 120° * 25°. It can be a rotating prism, a galvanometer, or a micro-electromechanical system (MEMS) galvanometer.

The detection target is a detectable object within the FOV.

The receiving optical system includes receiving optical paths of a first detector and a second detector. Specifically, the receiving optical system includes a lens, a reflector, and a diaphragm, etc. The receiving optical system includes a third reflector, a fourth reflector, a first filter, a second filter, a first receiving lens group, a second receiving lens group, and a third diaphragm. The third reflector, the first filter, the first receiving lens group, and the third diaphragm form the receiving optical path of the first detector. The third reflector, the fourth reflector, the second filter, the second receiving lens group, and the third diaphragm form the receiving optical path of the second detector.

The detector includes the first detector and the second detector. The first detector is configured to detect a laser pulse signal with a wavelength of $\lambda_1$, and the second detector is configured to detect a laser pulse signal with a wavelength of $\lambda_2$. The first detector is any one of PIN photodiode, avalanche photodiode (APD), silicon photomultiplier, and single-photon avalanche photodiode (SPAD). Similarly, the second detector is any one of PIN photodiode, APD, silicon photomultiplier, and SPAD.

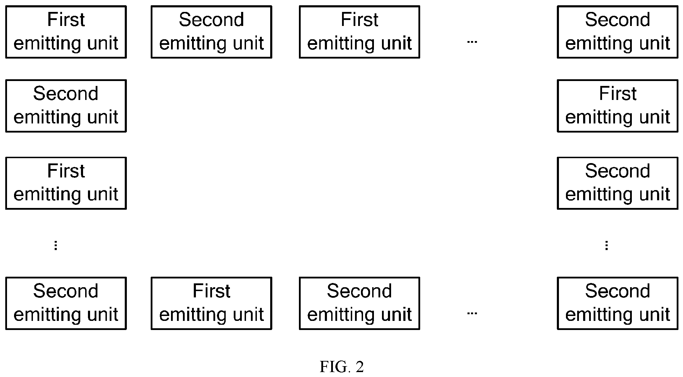

As shown in FIG. 2, the first emitting unit is any one of laser emitting light sources such as vertical cavity surface emitting laser (VCSEL), edge emitting laser (EEL), and fiber laser.

The second emitting unit is any one of laser emitting light sources such as VCSEL, EEL, and fiber laser.

The first emitting unit is configured to emit a laser pulse with a wavelength of $\lambda_1$, and the second emitting unit is configured to emit a laser pulse with a wavelength of $\lambda_2$. The positions of the first emitting unit and the second emitting unit are interchangeable.

The first emitting unit and the second emitting unit are the same type of laser light sources. Alternatively, the first emitting unit and the second emitting unit are laser light sources of different types.

The first emitting unit and the second emitting unit are single-point lasers. Alternatively, the first emitting unit and the second emitting unit are laser arrays. When the emitting unit is a laser matrix, the emitting unit includes at least one first emitting unit and one second emitting unit.

Considering a temperature drift of the laser, the following condition needs to be met:

$$\left| \lambda_1 - \lambda_2 \right| > \Delta\lambda_1 + \Delta\lambda_2$$

where, $\Delta\lambda_1$ denotes a maximum wavelength temperature drift range of the first emitting unit within an operating temperature range of the laser radar; and $\Delta\lambda_2$ denotes a maximum wavelength temperature drift range of the second emitting unit within the operating temperature range of the laser radar.

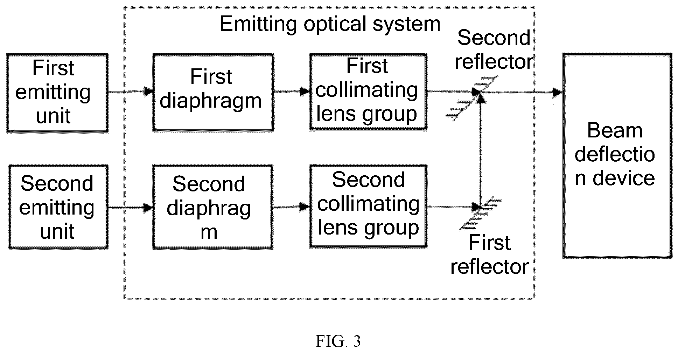

As shown in FIG. 3, the first diaphragm and the second diaphragm are configured to reduce a crosstalk between laser beams and serve as isolation between lasers.

The first collimating lens group is configured to collimate the laser beam emitted by the first emitting unit, including X-direction (transverse) collimation and Y-direction (longitudinal) collimation, or including only single-direction collimation. The first collimating lens is optional according to whether the laser beam of the first emitting unit needs to be collimated.

The second collimating lens group is configured to collimate the laser beam emitted by the second emitting unit, including X-direction (transverse) collimation and Y-direction (longitudinal) collimation, or including only single-direction collimation. The second collimating lens is optional according second whether the laser beam of the second emitting unit needs to be collimated.

The first reflector is a $\lambda_2$ total reflector. The second reflector is transparent for $\lambda_1$ and totally reflective for $\lambda_2$. Laser beams emitted by the first emitting unit and the second emitting unit pass through the second reflector and enter optical paths that coincide to form a coincident beam; and the coincident beam is emitted to the beam deflection device.

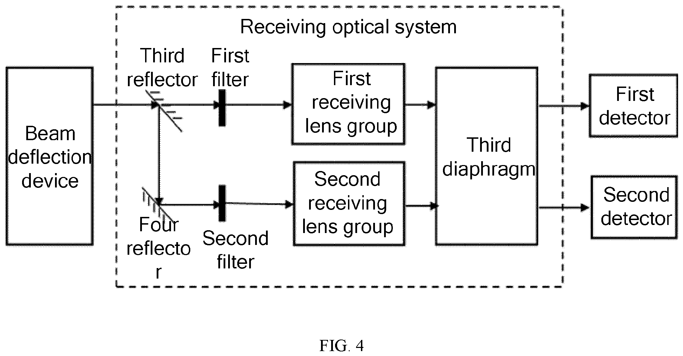

As shown in FIG. 4, the laser pulse reflected from the detection target reaches the third reflector through the beam deflection device. The third reflector is transparent for $\lambda_1$ and totally reflective for $\lambda_2$. The fourth reflector is a total reflector for $\lambda_2$. The first filter is anti-reflective for a reflected echo of $\lambda_1$ and can filter out a reflected echo of $\lambda_2$. The second filter is anti-reflective for the reflected echo of $\lambda_2$ and can filter out the reflected echo of $\lambda_1$. The first receiving lens group and the second receiving lens group are configured to converge received echoes. The third diaphragm serves to isolate light between different detector units, reducing crosstalk between the different detector units. The first detector is located at a focal plane position of the first receiving lens group, and the second detector is located at a focal plane position of the second receiving lens group. The positions of the first detector and the second detector are interchangeable.

After laser pulses with wavelengths of $\lambda_1$ and/or $\lambda_2$ emitted from the beam deflection device reach the first reflector, a laser pulse with one wavelength of $\lambda_1$ and/or $\lambda_2$ is totally emitted by the third reflector, reflected by the fourth reflector, and passes through the second filter, the second receiving lens group, and the third diaphragm to reach the second detector. A laser pulse with the other wavelength is transmitted from the third reflector and passes through the first filter, the first receiving lens group, and the third diaphragm to reach the first detector.

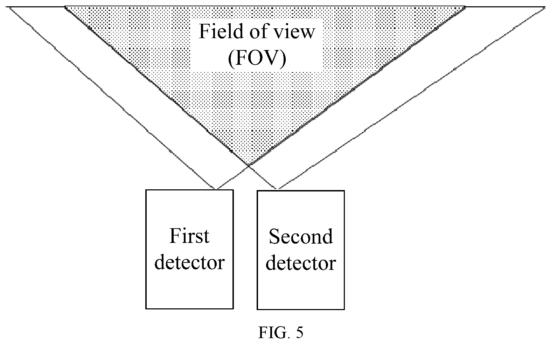

FIG. 5 shows the FOV. The area jointly covered by the first detector and the second detector serves as the FOV of the laser radar system. When a predetermined spatial position is detected, the first light emitting unit and the second light emitting unit simultaneously or sequentially emit laser pulses towards that position.

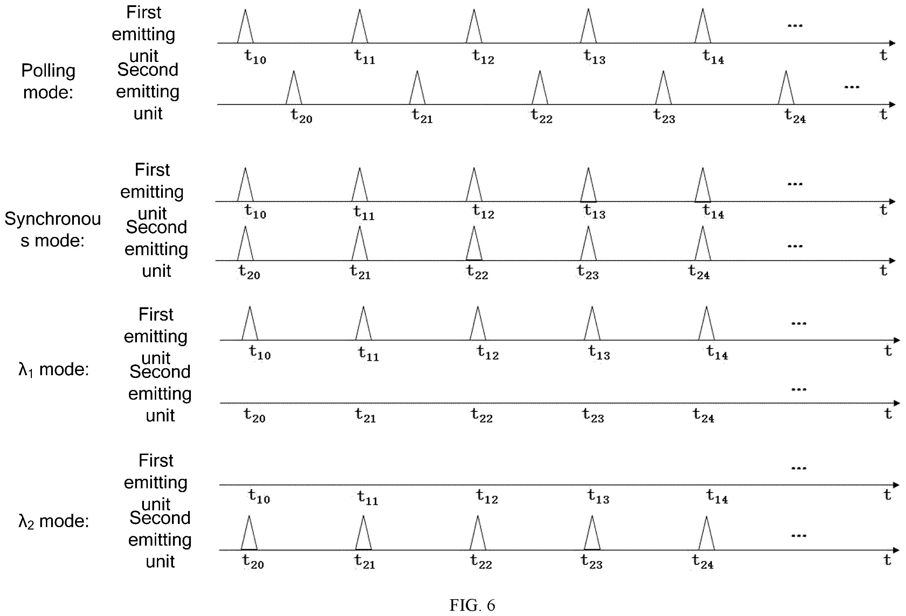

FIG. 6 shows laser pulse emission modes. In FIG. 6, the symbol t denotes time. Specifically, t10, t11, t12, t13, t14... denote the time when the first emitting unit emits laser pulses, and t20, t21, t22, t23, t24... denote the time when the second emitting unit emits laser pulses.

The laser radar has four pulse emission modes: polling mode, synchronous mode, $\lambda_1$ mode, and $\lambda_2$ mode.

In the polling mode, the first emitting unit and the second emitting unit sequentially poll and emit laser pulses. The time interval between two pulses emitted by the same emitting unit can be set to be the same or different. The time interval between adjacent pulses emitted by the first emitting unit and the second emitting unit can be set to be the same or different. In the polling mode, point cloud data from the first emitting unit and the first detector and point data from the second emitting unit and the second detector can be output sequentially.

In the synchronous mode, the first emitting unit and the second emitting unit emit laser pulses synchronously. The time interval between two pulses emitted by the same emitting unit can be set to be the same or different.

In the $\lambda_1$ mode, only the first emitting unit emits laser pulses, and the time interval between two pulses can be set to be the same or different.

In the $\lambda_2$ mode, only the second emitting unit emits laser pulses, and the time interval between two pulses can be set to be the same or different.

Each time when the first emitting unit emits a pulse, the first detector is in an enabled state (on state), and the second detector can be set to be in an enabled state or a disabled state (off state).

Similarly, each time when the second emitting unit emits a pulse, the second detector is in an enabled state (on state), and the first detector can be set to be in an enabled state or a disabled state (off state).

After completing the detection of a complete frame, the laser radar system switches the laser pulse emission mode at the beginning of the next frame.

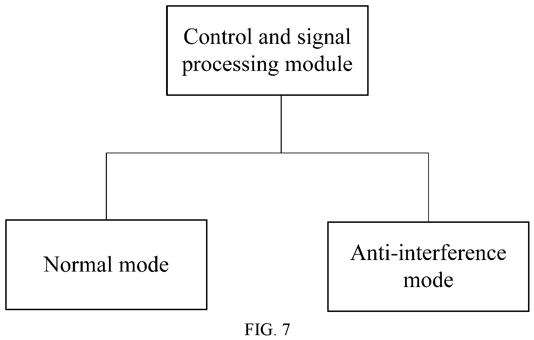

FIG. 7 shows operating modes of the laser radar. The laser radar can operate in a normal mode or an anti-interference mode. When the laser radar operates in normal mode, the laser pulse emission mode of the laser radar can be set in any one of the polling mode, the synchronous mode, the $\lambda_1$ mode, and the $\lambda_2$ mode. In the $\lambda_1$ mode, only the point cloud data from the first emitting unit and the first detector is output, while the second detector is in a disabled state. In the $\lambda_2$ mode, only the point cloud data from the second emitting unit and the second detector is output, while the first detector is in a disabled state. Compared to the $\lambda_1$ mode and the $\lambda_2$ mode, in the polling mode, the point cloud data from the first emitting unit and the first detector and the point cloud data from the second emitting unit and the second detector are output sequentially. Compared to the $\lambda_1$ mode and the $\lambda_2$ mode, in the synchronous mode, two frames of point clouds are output at the same time, one from the first emitting unit and the first detector and the other from the second emitting unit and the second detector. In the anti-interference mode, the polling mode, the synchronous mode, the $\lambda_1$ mode, and the $\lambda_2$ mode can be switched according to the interference situation to achieve the anti-interference function. After completing the detection of a complete frame, the laser radar system switches its operating mode at the beginning of the next frame.

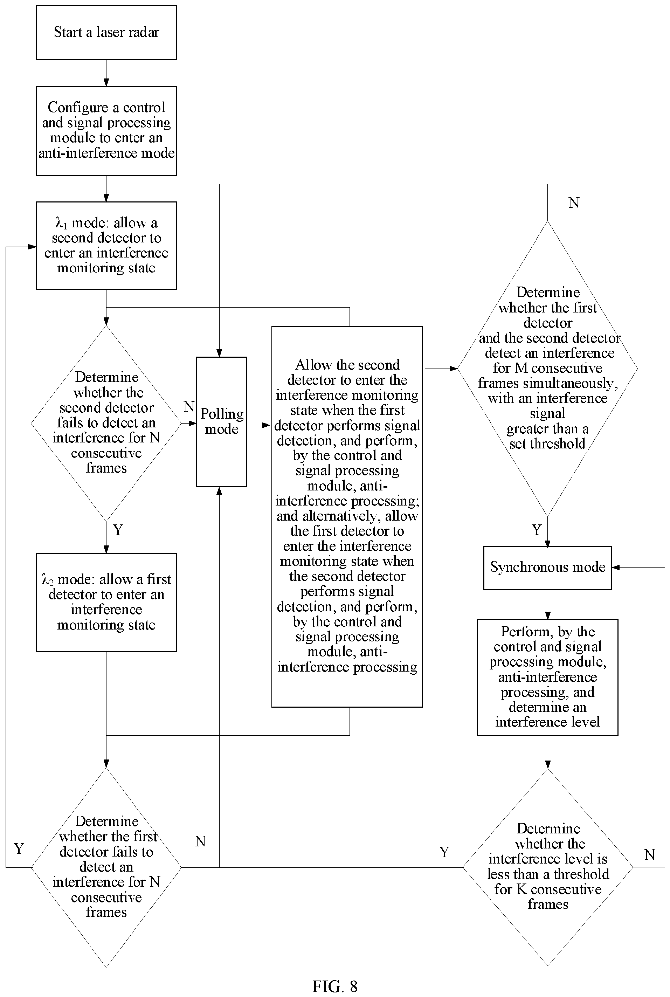

FIG. 8 shows an anti-interference method of a dual-wavelength TOF-based laser radar system, where a laser radar is set in anti-interference mode, a first detector and a second detector are set in an enabled state, and the anti-interference method specifically includes the following steps.

Step 1. The laser radar system starts.
Step 2. A control and signal processing module is configured to enter an anti-interference mode.
Step 3.

In a first case, a pulse laser emission mode defaults to a $\lambda_1$ mode, the second detector is controlled to enter an interference monitoring state, and it is determined whether the second detector detects an interference.

If the second detector fails to detect an interference for N consecutive frames, N being a positive integer greater than or equal to 1, the pulse laser emission mode automatically switches to a $\lambda_2$ mode, and the first detector is controlled to enter an interference monitoring state.

If the second detector detects an interference, the pulse laser emission mode automatically switches to a polling mode.

In a second case, the pulse laser emission mode defaults to the $\lambda_2$ mode, the first detector is controlled to enter the interference monitoring state, and it is determined whether the first detector detects an interference.

If the first detector fails to detect an interference for N consecutive frames, N being a positive integer greater than or equal to 1, the pulse laser emission mode automatically switches to the $\lambda_1$ mode, and the second detector is controlled to enter the interference monitoring state.

If the first detector detects an interference, the pulse laser emission mode automatically switches to the polling mode.

Step 4. In the polling mode, the second detector is controlled to enter the interference monitoring state when the first detector performs signal detection; the first detector is controlled to enter the interference monitoring state when the second detector performs signal detection; and the control and signal processing module performs anti-interference processing.
Step 5.

In a first case, if the first detector and the second detector detect an interference for M consecutive frames simultaneously, where M is a positive integer greater than or equal to 1 and an interference signal is greater than a set threshold, the pulse laser emission mode automatically switches to a synchronous mode; and the control and signal processing module performs anti-interference processing and determines an interference level.

If the interference level is less than a threshold for K consecutive frames, K being a positive integer greater than or equal to 1, the pulse laser emission mode automatically switches to the polling mode.

If the interference level is greater than or equal to the threshold for K consecutive frames, K being a positive integer greater than or equal to 1, the pulse laser emission mode automatically switches to the synchronous mode.

In a second case, if the first detector and the second detector fail to detect an interference for M consecutive frames simultaneously, where M is a positive integer greater than or equal to 1 and an interference signal is less than or equal to a set threshold, the pulse laser emission mode automatically switches to the polling mode.

In the polling mode, the control and signal processing module performs interference information processing as follows.

Step (1). Interference intensities of the first detector and the second detector are calculated.
Step (2). The interference intensities of the first detector and the second detector are compared.
Step (3). Primary data and secondary data are determined.
Step (4). The primary data and the secondary data are output.

In the synchronous mode, the control and signal processing module performs interference information processing as follows.

In a first step, information on a single detection of the first detector and the second detector is acquired, including, but not limited to, distance, angle, reflectivity, and reflection intensity.

In a second step, it is determined whether detection data of the first detector and the second detector are within a predetermined deviation range or satisfy a predetermined relationship, and it is determined whether there is an interference in the detection.

In a third step, it is determined that the detection data is invalid if there is an interference; and it is determined that the detection is valid if there is not any interference.

In a fourth step, valid data of the first detector and the second detector are simultaneously output.

It should be noted that when the laser radar is set in an anti-interference mode, both the first detector and the second detector are set in an enabled state. The pulse laser emission mode defaults to a $\lambda_1$ mode or a $\lambda_2$ mode. The $\lambda_1$ mode and the $\lambda_2$ mode are interchangeable in default state setting.

For example, the pulse laser emission mode defaults to the $\lambda_1$ mode. In the $\lambda_1$ mode, the second detector enters an interference monitoring state. If the second detector detects no interference for N consecutive frames (N is a positive integer greater than or equal to 1, and can be set as needed), the pulse laser emission mode automatically switches to the $\lambda_2$ mode. If this condition is not met, the pulse laser emission mode enters the polling mode. In the $\lambda_2$ mode, the first detector enters the interference monitoring state. If the first detector detects no interference for N consecutive frames (N is a positive integer greater than or equal to 1, and can be set as needed), the pulse laser emission mode automatically switches to the $\lambda_1$ mode. If this condition is not met, the pulse laser emission mode enters the polling mode.

It is determined that there is interference in each frame if the following condition is met. That is, a ratio of a number of interferences detected by the detector to a total number of data points in a frame is greater than a predetermined threshold during a detection period of one frame of data. For example, if a frame of data from the laser radar has 100,000 points and the second detector generates more than 5,000 detection responses (i.e. at least 5,001 detection responses) during the time period of one frame in the $\lambda_1$ mode, it is considered that there is interference. In this case, the threshold can be set to 5%. If the second detector generates a total of 5,500 detection responses within the detection time of the first detector for completing one full frame, it is determined that there is an interference source with a wavelength of $\lambda_2$. If the second detector generates 4,500 detection responses within this time, it is considered that there is no interference source with a wavelength of $\lambda_2$.

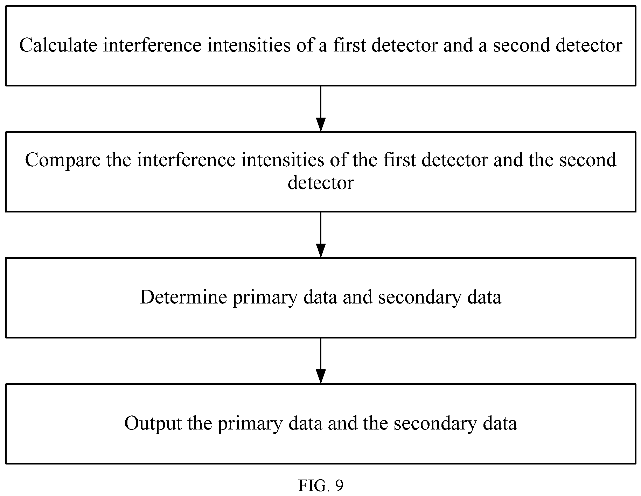

In the polling mode, when the first detector performs signal detection, the second detector enters an interference monitoring state, and when the second detector performs signal detection, the first detector enters an interference monitoring state. At the beginning of a frame, the first emitting unit and the second emitting unit of the laser radar poll to emit light (the first emitting unit emit lights first, or the second emitting unit emits light first, and the first emitting unit and the second emitting unit are interchangeable). When the first emitting unit emits light, the first detector performs target echo detection, and the second detector performs interference monitoring. When the second emitting unit emits light, the second detector performs target echo detection, and the second detector performs interference monitoring. The control and signal processing module performs interference information processing, and calculates the interference intensities of the first detector and the second detector, separately. Data with a low interference intensity is defined as primary data, and data with poor interference intensity is defined as secondary data. The laser radar outputs both primary data and secondary data simultaneously, as shown in FIG. 9.

The interference intensity of the first detector is defined as a ratio of a number of interferences detected by the first detector to a total number of points in one frame of data during a complete detection period of the second detector. The interference intensity of the second detector is defined as a ratio of a number of interferences detected by the second detector detects to a total number of points in one frame of data during a complete detection period of the first detector. When both the first detector and the second detector detect the presence of an interference, the control and signal processing module calculates the interference signal intensities of the first detector and the second detector. When a predetermined condition is met, the pulse laser emission mode enters the synchronous mode. The condition is as follows. In the detection of one frame by the first detector, the ratio of the number of interference signals detected to the total number of data points in one frame of data is $T_1$. In the detection of one frame by the second detector, the ratio of the number of interference signals detected to the total number of points in one frame of data is $T_2$. $T_1$ is greater than or equal to a threshold set by the first detector, and $T_2$ is greater than or equal to a threshold set by the second detector. If this situation occurs continuously for M frames (M is a positive integer greater than or equal to 1, and can be set according to specific embodiments), it is considered to meet the condition for entering the synchronous mode. For example, the threshold of the first detector is set to 10%, the threshold of the second detector is set to 15%, M=1, $T_1$=11%, and $T_2$=20%. If a situation meeting the condition occurs in one frame, the pulse laser emission mode enters the synchronous mode.

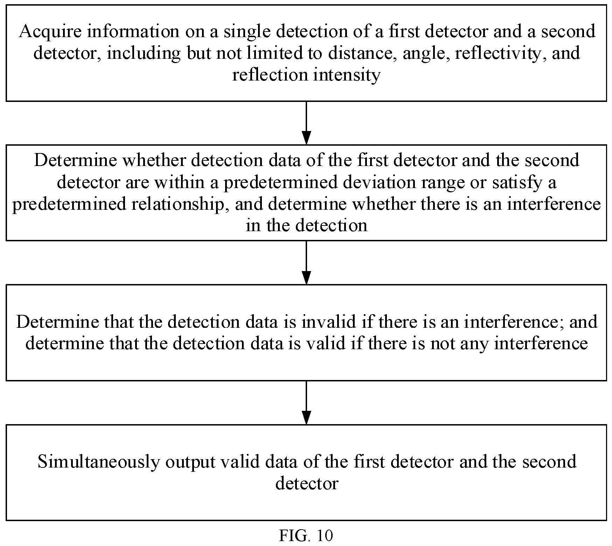

In the synchronous mode, the control and signal processing module performs anti-interference processing, as shown in FIG. 10, and calculates the interference level in the current mode. If the interference level is greater than or equal to a predetermined threshold, the pulse laser emission mode continues to remain in the synchronous mode. If the interference level is less than the threshold, the pulse laser emission mode enters the polling mode.

In the synchronous mode, the anti-interference processing method of the control and signal processing module is as follows. The information detected by the first detector and the second detector includes, but is not limited to, distance, angle, reflectivity, and reflection intensity. When the detection data of the first detector and the second detector are within a predetermined deviation range or satisfy a predetermined relationship, the detection is considered as interference-free detection, otherwise it is considered as interference detection. The value of the deviation can be set according to specific embodiments. For example, a distance deviation is within $\pm10$, an angle deviation is within 0.1°, a reflectivity deviation is within 10%, and a reflection intensity deviation is within 10%. Satisfying a predetermined relationship refers to adding weight values to each detection data when making comprehensive judgments. When the control and signal processing module performs anti-interference processing, if a synchronous detection is considered as interference detection, the corresponding detections of the first detector and the second detector are considered invalid. The invalid detection data of the first detector and the second detector are directly discarded, while their valid detection data are output by the laser radar together. In the detection of one frame, the interference level is denoted by a ratio of invalid detections, which means that the interference intensity is equal to the ratio of the number of invalid detections within the detection time of the frame to the total number of points in the frame of data. The threshold for the interference intensity can be set to a predetermined value, such as 10%. When the interference intensity is greater than or equal to 10%, the pulse laser emission mode remains in the synchronous mode. If the interference intensity is less than 10% and there are consecutive K frames (K is a positive integer greater than or equal to 1, and can be set according to specific embodiments), the pulse laser emission mode enters the polling mode.

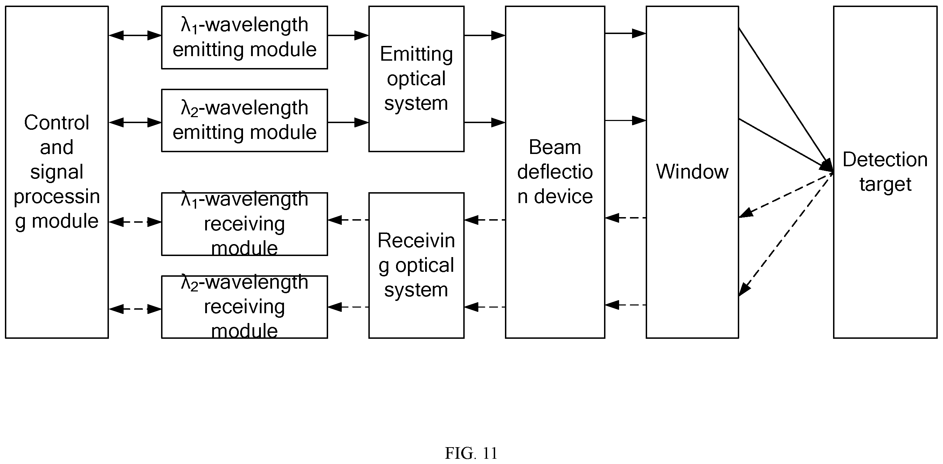

In FIG. 11, the first emitting unit can also be referred to as a $\lambda_1$-wavelength emitting module, and the second emitting unit can also be referred to as a $\lambda_2$-wavelength emitting module. The first detector can also be referred to as a $\lambda_1$-wavelength receiving module, and the second detector can also be referred to as a $\lambda_2$-wavelength receiving module.

The dual-wavelength TOF-based laser radar system in the present disclosure achieves the anti-interference ability of the laser radar system and the processing of interference signals through dual-wavelength polling switching and collaborative work. The architecture of the laser radar system includes the control and signal processing module, the $\lambda_1$-wavelength emitting module, the $\lambda_2$-wavelength emitting module, the emitting optical system, the beam deflection device, a window, the detection target, the receiving optical system, the $\lambda_1$-wavelength receiving module, and the $\lambda_2$-wavelength receiving module. The window is transparent to both $\lambda_1$ laser and $\lambda_2$ laser, but it hinders light of other wavelengths from entering the interior of the laser radar. In addition, the window also has dust-proof, waterproof, dirt proof, cleaning resistant, stone impact resistant, defrosting and defogging designs. The control and signal processing module controls the laser emission of the emitting module, the reception of the receiving module, and the processing of the echo signal. The $\lambda_1$-wavelength emitting module emits laser pulses with a wavelength of $\lambda_1$, while the $\lambda_2$-wavelength emitting module emits laser pulses with a wavelength of $\lambda_2$. The present disclosure adopts a dual-light-source and dual-detector configuration, which realizes the design of the dual-wavelength laser radar system. The present disclosure achieves real-time monitoring of interference and processing of interference signals through polling switching and collaborative work of dual light sources and dual detectors. The system design and anti-interference method of the present disclosure can effectively deal with various interference sources, have high anti-interference ability, and can achieve efficient detection of the laser radar.

The above described are merely preferred specific implementations of the present disclosure, and the protection scope of the present disclosure is not limited thereto. Any equivalent substitutions or changes made by those skilled in the art according to the technical solutions and concepts of the present disclosure within the technical scope of the present disclosure should be covered by the protection scope of the present disclosure.

## Claims

1.  An anti-interference method of a dual-wavelength time-of-flight (TOF)-based laser radar system, **characterized in that** a laser radar is set in an anti-interference mode, a first detector and a second detector are set in an enabled state, and the anti-interference method specifically comprises the following steps:

    step 1: starting the laser radar system;
    step 2: configuring a control and signal processing module to enter an anti-interference mode;
    step 3:

        in a first case: when a pulse laser emission mode defaults to a $\lambda_1$ mode, allowing the second detector to enter an interference monitoring state, and determining whether the second detector detects an interference;
        if the second detector fails to detect an interference for N consecutive frames, N being a positive integer greater than or equal to 1, automatically switching to a $\lambda_2$ mode, and allowing the first detector to enter an interference monitoring state; and
        if the second detector detects an interference, automatically switching to a polling mode; and
        in a second case: when the pulse laser emission mode defaults to the $\lambda_2$ mode, allowing the first detector to enter the interference monitoring state, and determining whether the first detector detects an interference;
        if the first detector fails to detect an interference for N consecutive frames, N being a positive integer greater than or equal to 1, automatically switching to the $\lambda_1$ mode, and allowing the second detector to enter the interference monitoring state; and
        if the first detector detects an interference, automatically switching to the polling mode; and

    step 4: in the polling mode: allowing the second detector to enter the interference monitoring state when the first detector performs signal detection; allowing the first detector to enter the interference monitoring state when the second detector performs signal detection; and performing, by the control and signal processing module, anti-interference processing; and
    step 5:

        in a first case: if the first detector and the second detector detect an interference for M consecutive frames simultaneously, wherein M is a positive integer greater than or equal to 1 and an interference signal is greater than a set threshold, automatically switching to a synchronous mode; and performing, by the control and signal processing module, anti-interference processing, and determining an interference level;

if the interference level is less than a threshold for K consecutive frames, K being a positive integer greater than or equal to 1, automatically switching to the polling mode; and

if the interference level is greater than or equal to the threshold for K consecutive frames, K being a positive integer greater than or equal to 1, automatically switching to the synchronous mode; and

in a second case: if the first detector and the second detector fail to detect an interference for M consecutive frames simultaneously, wherein M is a positive integer greater than or equal to 1 and an interference signal is less than or equal to a set threshold, automatically switching to the polling mode.

2. The anti-interference method according to claim 1, **characterized in that** in the polling mode, the control and signal processing module performs interference information processing by:

   step (1): calculating interference intensities of the first detector and the second detector;
   step (2): comparing the interference intensities of the first detector and the second detector;
   step (3): determining primary data and secondary data; and
   step (4): outputting the primary data and the secondary data.

3. The anti-interference method according to claim 1, **characterized in that** in the synchronous mode, the control and signal processing module performs interference information processing by:

   first step, acquiring information on a single detection of the first detector and the second detector, wherein the information comprises, but is not limited to, distance, angle, reflectivity, and reflection intensity;
   second step, determining whether detection data of the first detector and the second detector are within a predetermined deviation range or satisfy a predetermined relationship, and determining whether there is an interference in the single detection;
   third step, determining that the detection data is invalid if there is an interference; and determining that the detection data is valid if there is not any interference; and

fourth step, simultaneously outputting valid data of the first detector and the second detector.

4. A dual-wavelength TOF-based laser radar system for implementing the anti-interference method according to claim 1, **characterized by** comprising:

   the control and signal processing module, an emitting unit, an emitting optical system, a beam deflection device, a detection target, a receiving optical system, and a detector, wherein
   the control and signal processing module is configured to control laser emission of the emitting unit, reception of the detector, and processing of an echo signal;
   the emitting unit is configured to emit a laser pulse; and the emitting unit comprises a first emitting unit for emitting a laser pulse with a wavelength of $\lambda_1$ and a second emitting unit for emitting a laser pulse with a wavelength of $\lambda_2$;
   the emitting optical system comprises an emitting optical path of the first emitting unit and an emitting optical path of the second emitting unit;
   the beam deflection device is configured to deflect a laser beam to achieve scanning within a predetermined field of view;
   the detection target is a detectable object within the predetermined field of view;
   the receiving optical system comprises a receiving optical path of the first detector and a receiving optical path of the second detector; and
   the detector comprises the first detector and the second detector; the first detector is configured to detect a laser pulse signal with a wavelength of $\lambda_1$; and the second detector is configured to detect a laser pulse signal with a wavelength of $\lambda_2$.

5. The dual-wavelength TOF-based laser radar system according to claim 4, **characterized in that** the first emitting unit is any one of a vertical cavity surface emitting laser, an edge emitting laser, and a fiber laser; and the second emitting unit is any one of a vertical cavity surface emitting laser, an edge emitting laser, and a fiber laser.

6. The dual-wavelength TOF-based laser radar system according to claim 5, **characterized in that** the first emitting unit and the second emitting unit have laser light sources of a same type; and alternatively, the first emitting unit and the second emitting unit have laser light sources of different types.

7. The dual-wavelength TOF-based laser radar system according to claim 5, **characterized in that** the first

**EP 4 528 322 A1**

emitting unit and the second emitting unit each adopt a single-point laser; and alternatively, the first emitting unit and the second emitting unit each adopt a laser array.

8. The dual-wavelength TOF-based laser radar system according to claim 4, **characterized in that**

the emitting optical system comprises a first diaphragm, a second diaphragm, a first collimating lens, a second collimating lens, a first reflector, and a second reflector;

the first diaphragm, the first collimating lens, and the second reflector form the emitting optical path of the first emitting unit;

the second diaphragm, the second collimating lens, the first reflector, and the second reflector form the emitting optical path of the second emitting unit; and

laser beams emitted by the first emitting unit and the second emitting unit pass through the second reflector and enter optical paths that coincide to form a coincident beam; and the coincident beam is emitted to the beam deflection device.

9. The dual-wavelength TOF-based laser radar system according to claim 4, **characterized in that**: the receiving optical system comprises a third reflector, a fourth reflector, a first filter, a second filter, a first receiving lens group, a second receiving lens group, and a third diaphragm; the third reflector, the first filter, the first receiving lens group, and the third diaphragm form the receiving optical path of the first detector; the third reflector, the fourth reflector, the second filter, the second receiving lens group, and the third diaphragm form the receiving optical path of the second detector; after laser pulses with wavelengths of $\lambda_1$ and/or $\lambda_2$ emitted from the beam deflection device reach the first reflector, a laser pulse with one wavelength of $\lambda_1$ and/or $\lambda_2$ is totally emitted by the third reflector, reflected by the fourth reflector, and passes through the second filter, the second receiving lens group, and the third diaphragm to reach the second detector; and a laser pulse with an other wavelength is transmitted from the third reflector and passes through the first filter, the first receiving lens group, and the third diaphragm to reach the first detector.

10. The dual-wavelength TOF-based laser radar system according to claim 9, **characterized in that** the first detector is located at a focal plane position of the first receiving lens group, and the second detector is located at a focal plane position of the second receiving lens group.

First emitting unit

Second emitting unit

Emitting optical system

Control and signal processing module

Beam deflection device

Detection target

First detector

Receiving optical system

Second detector

FIG. 1

| First emitting unit | Second emitting unit | First emitting unit | ... | Second emitting unit |
|---|---|---|---|---|
| Second emitting unit | | | | First emitting unit |
| First emitting unit | | | | Second emitting unit |
| ⋮ | | | | ⋮ |
| Second emitting unit | First emitting unit | Second emitting unit | ... | Second emitting unit |

FIG. 2

FIG. 3

FIG. 4

FIG. 5

Polling
mode:

First
emitting
unit

$t_{10}$  $t_{11}$  $t_{12}$  $t_{13}$  $t_{14}$  ...  t

Second
emitting
unit

$t_{20}$  $t_{21}$  $t_{22}$  $t_{23}$  $t_{24}$  ...  t

Synchronou
s mode:

First
emitting
unit

$t_{10}$  $t_{11}$  $t_{12}$  $t_{13}$  $t_{14}$  ...  t

Second
emitting
unit

$t_{20}$  $t_{21}$  $t_{22}$  $t_{23}$  $t_{24}$  ...  t

$\lambda_1$ mode:

First
emitting
unit

$t_{10}$  $t_{11}$  $t_{12}$  $t_{13}$  $t_{14}$  ...  t

Second
emitting
unit

$t_{20}$  $t_{21}$  $t_{22}$  $t_{23}$  $t_{24}$  ...  t

$\lambda_2$ mode:

First
emitting
unit

$t_{10}$  $t_{11}$  $t_{12}$  $t_{13}$  $t_{14}$  ...  t

Second
emitting
unit

$t_{20}$  $t_{21}$  $t_{22}$  $t_{23}$  $t_{24}$  ...  t

FIG. 6

Control and signal processing module

Normal mode

Anti-interference mode

FIG. 7

```
┌─────────────────────┐
│  Start a laser radar │
└─────────────────────┘
           │
           ▼
┌─────────────────────┐
│ Configure a control │
│ and signal processing│
│ module to enter an   │
│ anti-interference mode│
└─────────────────────┘
           │
           ▼
┌─────────────────────┐
│ λ₁ mode: allow a    │
│ second detector to  │
│ enter an interference│
│ monitoring state     │
└─────────────────────┘
```

λ₁ mode: allow a second detector to enter an interference monitoring state

Determine whether the second detector fails to detect an interference for N consecutive frames

Polling mode

Allow the second detector to enter the interference monitoring state when the first detector performs signal detection, and perform, by the control and signal processing module, anti-interference processing; and alternatively, allow the first detector to enter the interference monitoring state when the second detector performs signal detection, and perform, by the control and signal processing module, anti-interference processing

Determine whether the first detector and the second detector detect an interference for M consecutive frames simultaneously, with an interference signal greater than a set threshold

λ₂ mode: allow a first detector to enter an interference monitoring state

Synchronous mode

Perform, by the control and signal processing module, anti-interference processing, and determine an interference level

Determine whether the first detector fails to detect an interference for N consecutive frames

Determine whether the interference level is less than a threshold for K consecutive frames

FIG. 8

```
┌─────────────────────────────────────────────────────────────────┐
│                                                                   │
│   Calculate interference intensities of a first detector and a    │
│                         second detector                           │
│                                                                   │
└─────────────────────────────────────────────────────────────────┘
                                  │
                                  ▼
┌─────────────────────────────────────────────────────────────────┐
│                                                                   │
│   Compare the interference intensities of the first detector and  │
│                        the second detector                        │
│                                                                   │
└─────────────────────────────────────────────────────────────────┘
                                  │
                                  ▼
┌─────────────────────────────────────────────────────────────────┐
│                                                                   │
│           Determine primary data and secondary data               │
│                                                                   │
└─────────────────────────────────────────────────────────────────┘
                                  │
                                  ▼
┌─────────────────────────────────────────────────────────────────┐
│                                                                   │
│           Output the primary data and the secondary data          │
│                                                                   │
└─────────────────────────────────────────────────────────────────┘
```

FIG. 9

Acquire information on a single detection of a first detector and a second detector, including but not limited to distance, angle, reflectivity, and reflection intensity

Determine whether detection data of the first detector and the second detector are within a predetermined deviation range or satisfy a predetermined relationship, and determine whether there is an interference in the detection

Determine that the detection data is invalid if there is an interference; and determine that the detection data is valid if there is not any interference

Simultaneously output valid data of the first detector and the second detector

FIG. 10

FIG. 11

## INTERNATIONAL SEARCH REPORT

| | International application No. |
| --- | --- |
| | **PCT/CN2023/108298** |

**A.  CLASSIFICATION OF SUBJECT MATTER**

G01S 7/495(2006.01)i;  G01S 7/481(2006.01)i

According to International Patent Classification (IPC) or to both national classification and IPC

**B.  FIELDS SEARCHED**

Minimum documentation searched (classification system followed by classification symbols)

IPC:  G01S 7

Documentation searched other than minimum documentation to the extent that such documents are included in the fields searched

Electronic data base consulted during the international search (name of data base and, where practicable, search terms used)

CNTXT, ENTXTC, VEN: 常州星宇车灯股份有限公司, 激光, 雷达, 双, 多, 三, 不同, 波长, 频率, 干扰, 串扰, 接收, 探测, 检测, 判断, 监测, 侦听, 感知, 环境, 外部, 外界, 其它, 其他, lidar, radar, laser, two, double, multiple, plural, array, different, wavelength, frequency, disturb, noise, interference, monitor, detect, receive, sense, environment, other, another, external

**C.  DOCUMENTS CONSIDERED TO BE RELEVANT**

| Category* | Citation of document, with indication, where appropriate, of the relevant passages | Relevant to claim No. |
| --- | --- | --- |
| PX | CN 116148817 A (CHANGZHOU XINGYU AUTOMOTIVE LIGHTING SYSTEMS CO., LTD.) 23 May 2023 (2023-05-23)<br>claims 1-10 | 1-10 |
| A | CN 113589304 A (ZVISION TECHNOLOGIES CO., LTD.) 02 November 2021 (2021-11-02)<br>description, paragraphs 0042-0057 | 1-10 |
| A | US 2021033711 A1 (INFINEON TECHNOLOGIES AG.) 04 February 2021 (2021-02-04)<br>entire document | 1-10 |
| A | CN 115308696 A (FOSHAN ELECTRICAL AND LIGHTING CO., LTD.) 08 November 2022 (2022-11-08)<br>entire document | 1-10 |
| A | CN 114859302 A (HUAWEI TECHNOLOGIES CO., LTD.) 05 August 2022 (2022-08-05)<br>entire document | 1-10 |
| A | WO 2023017054 A1 (OSRAM OPTO SEMICONDUCTORS G.M.B.H.) 16 February 2023 (2023-02-16)<br>entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 November 2023** | **23 November 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/108298** |

**C.    DOCUMENTS CONSIDERED TO BE RELEVANT**

| Category* | Citation of document, with indication, where appropriate, of the relevant passages | Relevant to claim No. |
|---|---|---|
| A | US 2018059219 A1 (QUALCOMM INC.) 01 March 2018 (2018-03-01)<br>    entire document | 1-10 |

Form PCT/ISA/210 (second sheet) (July 2022)

**INTERNATIONAL SEARCH REPORT**
Information on patent family members

International application No.

**PCT/CN2023/108298**

| Patent document cited in search report | | | Publication date (day/month/year) | Patent family member(s) | | | Publication date (day/month/year) |
|---|---|---|---|---|---|---|---|
| CN | 116148817 | A | 23 May 2023 | CN | 116148817 | B | 07 July 2023 |
| CN | 113589304 | A | 02 November 2021 | WO | 2022062984 | A1 | 31 March 2022 |
| US | 2021033711 | A1 | 04 February 2021 | US | 11592537 | B2 | 28 February 2023 |
| CN | 115308696 | A | 08 November 2022 | | None | | |
| CN | 114859302 | A | 05 August 2022 | WO | 2022166241 | A1 | 11 August 2022 |
| WO | 2023017054 | A1 | 16 February 2023 | DE | 102021120807 | A1 | 16 February 2023 |
| US | 2018059219 | A1 | 01 March 2018 | WO | 2018044481 | A1 | 08 March 2018 |

Form PCT/ISA/210 (patent family annex) (July 2022)